# EUROPÄISCHE PATENTANMELDUNG

(11) **EP 0 857 628 A2**
(43) Veröffentlichungstag der Anmeldung: **12.08.1998**
(21) Anmeldenummer: 98100711.5
(22) Anmeldetag: 16.01.1998
(51) Int. Cl.: B60R 22/22

(54) **Gurtschloss mit daran befestigtem Zugseil**

(30) Priorität: 06.02.1997 DE 29702077 U
(71) Anmelder: TRW Occupant Restraint Systems GmbH & Co. KG, 73551 Alfdorf (DE)
(72) Erfinder: Feile, Herbert, 73529 Schwäbisch Gmünd (DE); Kinzel, Albert, 5342 Abersee (AT)
(74) Vertreter: Kitzhofer, Thomas, Dipl.-Ing.

(57) **Zusammenfassung**

Ein Gurtschloß mit wenigstens einem daran befestigten Zugseil (3), an dem ein Endstück (5) zur fahrzeugfesten Montage des Zugseils (3) angebracht ist, ist dadurch gekennzeichnet, daß das Zugseil (3) zwischen dem Endstück (5) und dem Gurtschloß (1) von einem Halteteil (9) umschlossen ist, welches das Zugseil (3) in einer umgelenkten Stellung hält.

## Beschreibung

Die Erfindung betrifft ein Gurtschloß mit wenigstens einem daran befestigten Zugseil, an dem ein Endstück zur fahrzeugfesten Montage des Zugseils angebracht ist, sowie eine Gurtschloßanordnung mit zwei Gurtschlössern mit einem gemeinsamen Zugseil.

Ein Gurtschloß muß im Fahrzeug so angeordnet sein, daß das Einführen der Steckzunge in das Gurtschloß für den Fahrzeuginsassen möglichst einfach erfolgen kann. Das Gurtschloß sollte deshalb in einer ergonomisch günstigen Lage sein. Zu diesem Zweck ist es bislang teilweise notwendig, das eigentlich zwischen dem Gurtschloß und dem Endstück geradlinig verlaufende Zugseil nahe des Gurtschlosses zu knicken, um die Stellung des Gurtschlosses zu verändern. Durch das Knicken kann es jedoch zur Beschädigung des Zugseils kommen.

Das erfindungsgemäße Gurtschloß weist ein Zugseil auf, das auf einfache Weise umgelenkt werden kann, ohne daß die Gefahr einer Beschädigung des Zugseils besteht. Dies wird bei einem Gurtschloß der eingangs genannten Art dadurch erreicht, daß das Zugseil zwischen dem Endstück und dem Gurtschloß von einem Halteteil umschlossen ist, welches das Zugseil in einer umgelenkten Stellung hält. Das Halteteil ist ausschließlich am Zugseil befestigt und stellt ein einfach herzustellendes, billiges Teil dar.

Die freien Enden des Zugseils werden durch ein gemeinsames Endstück miteinander verbunden, welches üblicherweise auf sie aufgepreßt ist. Das Halteteil ist vorzugsweise eine das Seil oder, wenn das Seil zu einer Schlaufe geschlungen ist und sich zwei Seilabschnitte zwischen dem Gurtschloß und dem Endstück erstrecken, wenigstens einen Seilabschnitt umgebende Hülse. Diese Hülse kann auf das Seil oder den Seilabschnitt aufgepreßt sein.

Bei einer besonders einfachen Ausführungsform erfaßt die Hülse beide Seilabschnitte und hält sie in derjenigen Lage relativ zueinander fest, die sie in einer umgelenkten Stellung einnehmen.

Es ist jedoch nicht zwingend notwendig, daß das Halteteil auf das Zugseil aufgepreßt ist. Eine andere Möglichkeit, das Zugseil umzulenken, besteht darin, daß das Halteteil einen das Zugseil oder einen Seilabschnitt aufnehmenden, gekrümmt verlaufenden Kanal aufweist und dadurch das Zugseil insgesamt umlenkt.

Weitere Merkmale und Vorteile der Erfindung ergeben sich aus der nachfolgenden Beschreibung und aus der nachfolgenden Zeichnung, auf die Bezug genommen wird. In den Zeichnungen zeigen:
Fig. 1 eine Seitenansicht einer ersten Ausführungsform des erfindungsgemäßen Gurtschlosses mit daran befestigtem Zugseil,
Fig. 2 eine erste Ausführungsform der erfindungsgemäßen Gurtschloßanordnung,
Fig. 3 eine zweite Ausführungsform der Gurtschloßanordnung,
Fig. 4 eine dritte Ausführungsform der Gurtschloßanordnung, wobei in den Figuren 3 und 4 jeweils die Gurtschlösser nicht mehr explizit dargestellt sind, und
Fig. 5 eine gemeinsame Draufsicht auf das gemeinsame Zugseil samt dem Endstück und den Halteteilen nach den Figuren 2 bis 4.

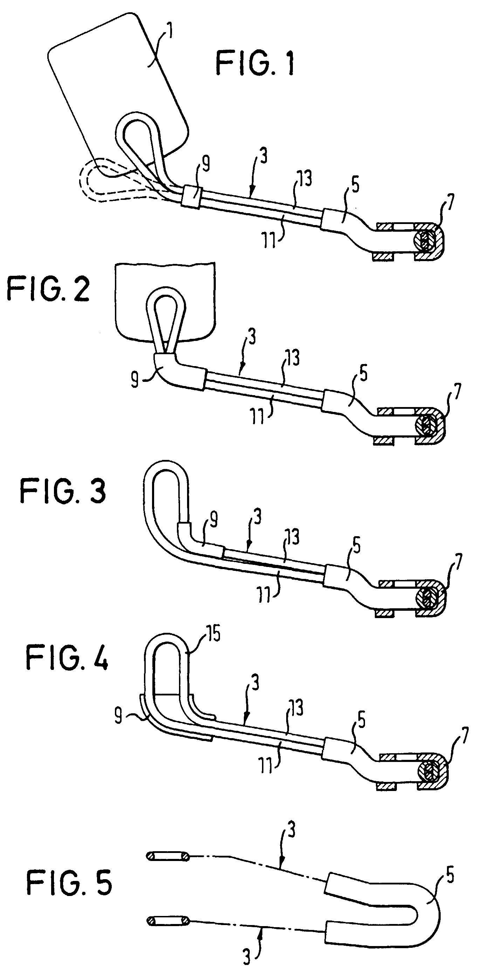

In Figur 1 ist ein Gurtschloß mit einem daran befestigten Zugseil 3 gezeigt. Das Zugseil ist zu einer Schlaufe gebogen, wobei die freien Enden durch ein Endstück 5 miteinander verbunden sind, indem es auf die freien Enden des Zugseils 3 aufgepreßt ist. Das Endstück 5 ist teilweise von einem Beschlagteil 7 umgeben, mit dem das Zugseil am Fahrzeug montiert wird. Zwischen dem Gurtschloß 1 und dem Endstück 5 ist in der Nähe des Gurtschlosses 1 ein Halteteil 9 vorgesehen, welches die beiden Seilabschnitte 11, 13 des Zugseils miteinander verpreßt. Um dem Gurtschloß eine schräg nach oben gerichtete, gewünschte Stellung zu geben, wird zuerst das Gurtschloß in die gewünschte, dargestellte Stellung gebracht. Anschließend wird das Halteteil 9 auf die beiden Seilabschnitte 11, 13 aufgepreßt, so daß die Lage der Seilabschnitte 11, 13 zueinander festgelegt ist und das Zugseil 3 nicht mehr in die mit unterbrochenen Linien gezeigte Ausgangsstellung zurückgelangen kann. Bei diesem Vorgang wird das Zugseil 3 nicht beschädigt. Das Halteteil 9 ist als geschlitzte Hülse ausgebildet.

In Figur 2 ist eine Gurtschloßanordnung gezeigt, bei der zwei Gurtschlösser vorgesehen sind, von denen in Figur 2 nur das vordere zu erkennen ist. Die beiden Gurtschlösser sind durch ein gemeinsames Zugseil 3 miteinander verbunden, das zwei Schlaufen hat, an denen jeweils ein Gurtschloß befestigt ist. Die Schlaufen werden dadurch gebildet, daß die freien Enden des Zugseils durch ein Endstück mit einem mittleren Abschnitt des Zugseils verbunden sind. Eine derartige Gurtschloßanordnung ist beispielsweise im Fahrzeugheck vorgesehen.

Das in Figur 1 gezeigte Prinzip der Seilumlenkung durch Vorsehen eines Halteteils ist jedoch auch auf die Gurtschloßanordnung anzuwenden, ebenso wie es selbstverständlich möglich ist, die in den Figuren 2 bis 5 dargestellten Ausführungsformen des Halteteils auch auf nur ein Gurtschloß mit einem Zugseil anzuwenden. Bei der in Figur 2 dargestellten Ausführungsform ist für jede Schlaufe eine Hülse vorgesehen, bei der jede Hülse gegenüber der in Figur 1 dargestellten Hülse lediglich länger und zusätzlich gebogen ist, wodurch das Zugseil in der Nähe des Gurtschlosses noch stärker umgelenkt werden kann als dies bei der in Figur 1 dargestellten Ausführungsform der Fall ist.

Das Halteteil 9 muß nicht zwingend beide Seilabschnitte 11, 13 klemmen oder sie miteinander verbinden, wie Figur 3 zeigt. Bei dieser Ausführungsform ist das Halteteil 9 nur eine auschließlich den Seilabschnitt 13 umschließende Hülse, die den Seilabschnitt 13 mit einer relativ geringen Klemmkraft erfassen kann.

Bei der in Figur 4 dargestellten Ausführungsform wird das Zugseil 3 nicht im Halteteil 9 geklemmt, sondern die Umlenkung erfolgt dadurch, daß im Inneren des Halteteils 9 zwei gekrümmt verlaufende Kanäle vorgesehen sind, die jeweils einen Seilabschnitt 11, 13 aufnehmen und umlenken. Dadurch werden die Seilabschnitte 11, 13 im Bereich der Schlaufe 15 auch beabstandet. Jedes Halteteil 9 besteht bei dieser Ausführungsform aus zwei zusammensetzbaren Einzelteilen, von denen nur das hintere gezeigt ist. Die beiden Einzelteile sind durch eine nicht näher dargestellte Clip-Verbindung aneinander befestigbar. Die Montage des Halteteils 9 erfolgt nachdem das zugeordnete Gurtschloß 1 in die gewünschte endgültige Stellung gebracht worden ist, wodurch die ihm zugeordneten Seilabschnitte gebogen werden. Anschließend werden die sich zu jeweils einem Halteteil ergänzenden Einzelteile an die Seilabschnitte 11, 13 angelegt und zusammengepreßt, so daß das Zugseil 3 in der gewünschten umgelenkten Stellung bleibt.

Wie in den Figuren 2 bis 5 zu erkennen ist, ist das Endstück 5 U-förmig gebogen und ist von dem Beschlagteil 7 umgeben.

## Patentansprüche

1. Gurtschloß mit wenigstens einem daran befestigten Zugseil (3), an dem ein Endstück (5) zur fahrzeugfesten Montage des Zugseils (3) angebracht ist, dadurch gekennzeichnet, daß das Zugseil (3) zwischen dem Endstück (5) und dem Gurtschloß (1) von einem Halteteil (9) umschlossen ist, welches das Zugseil (3) in einer umgelenkten Stellung hält.

2. Gurtschloß nach Anspruch 1, dadurch gekennzeichnet, daß die beiden freien Enden des Zugseils (3) zur Bildung einer Schlaufe durch das auf die Enden aufgepreßte Endstück (5) miteinander verbunden sind.

3. Gurtschloß nach Anspruch 2, dadurch gekennzeichnet, daß das Halteteil (9) die durch die Schlaufe gebildeten beiden Seilabschnitte (11, 13) erfaßt und sie in ihrer, in der umgelenkten Stellung eingenommenen Lage relativ zueinander hält.

4. Gurtschloß nach einem der vorstehenden Ansprüche, dadurch gekennzeichnet, daß das Halteteil (9) eine auf das Zugseil (3) aufgepreßte Hülse ist.

5. Gurtschloß nach den Ansprüchen 3 und 4, dadurch gekennzeichnet, daß die Hülse die beiden Seilabschnitte (11, 13) umschließt und sie klemmt.

6. Gurtschloß nach Anspruch 4 oder 5, dadurch gekennzeichnet, daß die Hülse quer zu ihrer Längserstreckung gebogen ist.

7. Gurtschloß nach einem der vorstehenden Ansprüche, dadurch gekennzeichnet, daß das Halteteil (9) wenigstens einen gekrümmt verlaufenden Kanal aufweist, der wenigstens einen der beiden durch die Schlaufe gebildeten Seilabschnitte (11, 13) aufnimmt.

8. Gurtschloß nach einem der vorstehenden Ansprüche, dadurch gekennzeichnet, daß das Halteteil (9) zwei miteinander verbindbare Einzelteile umfaßt, die zwischen sich das Zugseil (3) aufnehmen.

9. Gurtschloß nach Anspruch 8, dadurch gekennzeichnet, daß die Einzelteile durch eine Clip-Verbindung aneinander befestigt werden können.

10. Gurtschloßanordnung mit zwei Gurtschlössern nach einem der vorstehenden Ansprüche, wobei ein gemeinsames Zugseil (3), das zwei Schlaufen hat, an denen je ein Gurtschloß befestigt ist, ein gemeinsames, die freien Enden und einen mittleren Abschnitt des Zugseils verbindendes Endstück sowie wenigstens ein jedem Gurtschloß zugeordnetes Halteteil vorgesehen sind.
